# EUROPEAN PATENT APPLICATION

(11) **EP 1 000 903 A2**
(43) Date of publication of application: **17.05.2000**
(21) Application number: 99308889.7
(22) Date of filing: 08.11.1999
(51) Int. Cl.: C02F 1/28

(54) **Process for the removal of heavy metals from aqueous streams and system therefor**

(30) Priority: 11.11.1998 GB 9824694
(71) Applicant: Staffordshire University, Stoke on Trent, Staffordshire ST4 2DE (GB)
(72) Inventor: Anderson, Michael, Newcastle/Lyme, Staffordshire, ST5 0RW (GB); Jackson, Andrew Robert William, Stoke on Trent, Staffordshire, ST7 2QD (GB); Skerratt, Richard Glyn, Stoke on Trent, Staffordshire, ST7 4UZ (GB)
(74) Representative: Mosey, Stephen George

(57) **Abstract**

A process for the removal of heavy metals from an aqueous effluent stream in which the aqueous medium is passed through a bed which comprises a hydrated cementitious material in particulate form. Also disclosed is an adsorbent for use in the process, in the form of the hydrated cementitious material in the form of pellets or foamed, and a method for the production of the adsorbent material.

## Description

### Field of the Invention

This invention relates to the removal of heavy metals from aqueous effluent streams, more particularly to a process for the treatment of aqueous streams, to an adsorbent material for use in the process and to a method for the preparation of the adsorbent material.

### Background of the Invention

Some heavy metals such as mercury, silver and lead are known to be toxic and for environmental reasons there are legal limits on the discharge of such metals in effluents from industrial and mining operations. Other heavy metals may be less harmful but it is nevertheless highly desirable that the amounts released should be kept to a minimum.

### Problem to be solved by the Invention

Processes which have been previously proposed for the removal of heavy metals include the use of ion exchange resins. In such a process a heavy metal cation is exchanged for another metal such as sodium or a hydrogen ion on the resin. After a period the resin becomes exhausted and it is necessary for it to be regenerated which may be effected by means of a large quantity of common salt. This however generates another solution containing the heavy metal cations.

Another method has been described in United States Patent No 5,266,210 in which lime is added to the heavy metal containing solution to form metal hydroxides and gypsum with sulphate present in the waste water. Soda ash is then added to form calcium carbonate and reduce the formation of gypsum. This process has the disadvantage in that it involves a number of different steps and the ion exchange resins mentioned above are not always effective when the heavy metal-containing solution is saline.
The present invention provides a solution to these problems by a process which uses relatively inexpensive materials and which is highly effective in removing metals in a single stage operation.

### Summary of the Invention

According to the present invention a process for the removal of heavy metals from an aqueous medium comprises passing the aqueous medium through a bed comprising a hydrated cementitious material in particulate form.

The invention also provides a novel absorbent for use in the above defined process which comprises a hydrated cementitious material which may be foamed or in the form of pellets.

### Advantageous Effect of the Invention

The cementitious materials used in process of the invention have significant economic advantages over ion exchange resins.

### Detailed Description of the Invention

### The cementitious material.

The cementitious material in particulate form is preferably in the form of pellets although the particulate form may be provided by subdividing larger lumps which are formed on hydration.
It is preferred to employ the pellets in a column.
The cementitious material should therefore preferably be one that can be formed into pellets which have sufficient crushing resistance to be stable under their own weight in a vertical column (which can be for example up to 2 metres in height) and retain their physical integrity under prolonged immersion in water.

The diameter of the pellets will usually be from 1 to 15mm.

The cementitious material may comprise or consist of one that is known in the art as a foamed cement. Cements which can be foamed on hydration are commercially available and include, for example, those sold by Fosroc International Ltd under the trade names of Tekfoam and Durafoam. When these materials are hydrated air can be entrapped to form pores.

The particulate form of the cementitious material may be provided by casting a foamed cement as a block and then breaking the block into lumps which may be typically about 15 to 25 mm in diameter. These lumps may then be used as a bed.
References in the present specification to the diameter of a particle which may be of irregular i.e. non spherical shape should be taken to refer to the largest dimension of the particle.

The pores increase the surface area of the cementitious material.

The foamed cementitious material may be in the form of pellets.

The cementitious material is conveniently one that contains a substantial amount of Ettringite or an analogue thereof.

Ettringite enters into a number of solid solution series e.g. carbonate can replace sulphate, and Ettringite and the related mineral Thaumasite represent end members of a solid solution series and the term analogue should be construed accordingly.

Ettringite is a calcium trisulpho-aluminate having 32 molecules of water of crystallization and has an empirical formula coiTesponding to: 3CaO.Al₂O₃.3CaSO₄.32H₂O.

An alternative representation is Ca₈Al₂(SO₄)₃(OH)₁₂.26H₂O

In order to form Ettringite on hydration the cementitious material may contain an aluminous cement such as high alumina cement or calcium aluminosilicate in an amount of at least 10% by weight, preferably at least 15% by weight, based on the weight of material before hydration.

High alumina cement is well known in cement technology and is defined as a cement which contains not less than 32% by weight of alumina and has an alumina to calcium oxide ratio of between 0.85 and 1.3:1.

A particularly suitable cementitious material is one containing
(a) at least 15%, preferably at least 20% by weight of high alumina cement or calcium aluminosilicate and
(b) at least 15%, preferably at least 20% by weight of ordinary Portland cement and
(c) at least 15%, preferably at least 20% by weight of anhydrite, ( which may be beta anhydrite or natural anhydrite) all weights being based on the total weight of (a), (b) and (c) before hydration.

The material may contain other components in the amounts in which they are used in commercial cements and grouts such as sulphates, silicates and surfactants.

The process of the invention is suitable for the treatment of aqueous streams, which will usually be aqueous solutions, although it is possible to remove metals from aqueous emulsions in which the metals are in the aqueous phase.

### The heavy metals

By the term heavy metal we mean one having an atomic number greater than 20. Examples are: barium, iron, cobalt, nickel, zinc, copper, cadmium, titanium, vanadium, chromium, manganese, molybdenum, arsenic, antimony, bismuth, tin, lead, mercury, silver, uranium, precious metals such as gold, platinum and rhodium and the rare earths. The heavy metal will usually be present as a cation although in some instances it may be present as a complexed anion such as chromate.

### The process conditions

The heavy metal will usually be present in the aqueous medium before the treatment in a concentration of at least 0.5 parts per million,typically from 1 to 100 parts per million and the concentration of the metal in the stream leaving the column will usually be less than about 0.5 part per million preferably about 0.1 parts per million.
The aqueous medium containing the heavy metals may be passed upwardly or downwardly or horizontally through the bed.
Because the permitted concentrations of metals in effluents differ, the rate of flow and other operating conditions will preferably be adjusted to remove the required amount of metal.
Generally however the rate of flow through the bed will be such as to provide a residence time (total volume of liquid in the column/flow rate) of from 5 to 120 minutes.
The process will normally be carried out without heating or cooling at temperatures in the range from 0 to about 80 degrees Centigrade, usually at room temperature ie 15 to 25 degrees Centigrade.

According to another aspect of the present invention there is provided a hydrated cementitious material in particulate form suitable for use in a bed for the removal of heavy metals from aqueous media which cementitious material is foamed or in the form of pellets.
The size of the pellets is preferably 1 to 15 mm in diameter.
The present invention also provides a method for the preparation of pellets of a cementitious material for use in a bed which method comprises adding the cementitious material and water to a rotating pelletizer and controlling the size of the pellets by controlling the rate of rotation of the pelletizer and optionally the inclination of the pelletizer.

The method may include the step of forming the pellets around a solid nucleating agent for example an inorganic solid which may be a metal carbonate such as calcium carbonate.

The pelletizer may be a drum or pan. The cementitious material as a powder may be fed into the pan which is rotating and inclined. The size of the pellets may be adjusted from eg from 1 to 25 to 30 mm diameter by controlling the angle of inclination of the pan and its speed of rotation.

In a modification the invention includes a method for the preparation of a foamed hydrated cementitious material in particulate form for use in a bed which comprises:
hydrating the cementitious material under foam forming conditions to form a foamed hydrated cementitious material and then subdividing the hydrated material.
The foaming may be effected by causing air to be entrapped in the material during the hydration eg by shearing or other agitation of the mixture.
The hydrated cementitious may contain Ettringite or an analogue thereof.

The invention is illustrated by the following Examples.

### Example 1.

### Preparation of the pellets.

In this Example the cementitious material whose composition is given below was not foamed. It is however a material that is suitable for foaming by entrapping air.

The cementitious material was prepared containing the following componenets:

| **Component** | **% by weight** |
|---|---|
| high alumina cement | 29.90 |
| beta anhydrite | 29.60 |
| lithium carbonate | 0.30 |
| aluminium sulphate | 1.20 |
| surfactant | 0.40 |
| ordinary Portland cement | 37.90 |
| sodium silicate | 0.50 |

A mixture was prepared containing 90% by weight of the above composition and 10% by weight of Ordinary Portland cement.

The resulting mixture was formed into pellets in a pelletizer as follows:
Spheroids of calcium carbonate of diameter 0.5mm to 1 mm were tumbled in a pelletizer drum. To these were added the mixed cement powder described above together with sufficient deionized water to allow pellets to form. The addition of the cement powder and water was stopped when the maximum diameter of pellets present was 10mm. The pellets formed were then cured under deionized water at room temperature followed by drying at 40 degrees Centigrade.

7.1 kg of the pellets were loaded into a plastic tube of diameter 10cms to form a vertical column 75 cms in height.

To simulate an aqueous effluent, an aqueous solution was prepared by dissolving each of 7.6960g of chromium (Ills nitrate nonohydrate, 3.780g of copper (II) nitrate trihydrate, 1.5980g of lead (II) nitrate and 4.9530 g of nickel (II) nitrate hexahydrate in deionized water and 1.2450g of zinc oxide was dissolved in 5 Molar hydrochloric acid. All of these solutions were combined and the result was diluted with deionized water to a volume of 5 litres. Serial dilution with deionized water was performed so that an aqueous solution resulted containing 5 parts per million of each of the five metals.
The pH of the diluted solution was approximately 3.
This solution was fed from a reservoir and passed downwardly through the column so that it had a residence time within the column of approximately 20 minutes.

The effluent from the base of the column was collected in 5 litre batches. A sample of each of these batches was filtered through a Whatman No 542 filter paper and the filtrate was analysed for each of the metals listed above. From the start of the experiment until 2500 litres had passed through the column, the concentration of each of the five metal cations tested was found to be consistently below 1 part per million by weight in most samples. Furthermore the vast majority of samples were found to have a concentration of less than 0.5 parts per million for each of the metals tested. The pH of the collected effluent varied over the range of approximately 10 to approximately 6.

The advantages of the above described invention are:
(i) the cementitious material is cheaper than conventional cation exchange resins and can be used to treat heavy metal streams which also contain brine
(ii) the nature of the cementitious material permits a high flow rate through the column
(iii) the process is effective for removing heavy metals to concentrations of about 0.1 part per million
(iv) the invention is particularly suitable for the recovery of precious metals from mine tailings, for the batch treatment of spillages, as a final polishing stage for a conventional water treatment plant, as a replacement for conventional water treatment plant, in-situ treatment of, for example, tip leachate and as a sorbent for the removal of potentially toxic elements from contaminated land.

## Claims

1. A process for the removal of heavy metals from an aqueous medium which process comprises passing the aqueous medium through a bed comprising a hydrated cementitious material in particulate form.

2. A process as claimed in claim 1 wherein the cementitious material contains Ettringite.

3. A process as claimed in claim 1 or 2 wherein the cementitious material is foamed.

4. A process as claimed in any one of the preceding claims wherein the cementitious material is in the form of pellets.

5. A process as claimed in any one of the preceding claims wherein the aqueous medium contains one or more heavy metal cations in an amount in excess of 2 parts per million and the process comprises controlling the flow rate through the bed so that the content of the metal in the aqueous medium leaving the bed is less than 1 part per million preferably less than 0.5 parts per million.

6. A hydrated cementitious material in particulate form for use in a bed for the removal of heavy metals from aqueous media the cementitious material being foamed or in the form of pellets.

7. A hydrated cementitious material as claimed in claim 6 wherein the pellets have been formed around spheroids of a solid inorganic nucleating agent.

8. A hydrated cementitious material as claimed in claim 7 wherein the nucleating agent is a metal carbonate such as calcium carbonate.

9. A hydrated cementitious material as claimed in any one of claims 6 to 8 wherein the material contains entrapped air.

10. A hydrated cementitious material as claimed in any one of claims 6 to 9 wherein the cementitious material contains Ettringite.

11. A hydrated material as claimed in claim 10 wherein the cementitious material before hydration contains:
(a) at least 15%, preferably at least 20% by weight of high alumina cement or calcium aluminosilicate and
(b) at least 15%, preferably at least 20% by weight of ordinary Portland cement and
(c) at least 15%, preferably at least 20% by weight of anhydrite, (which may be beta anhydrite or natural anhydrite) all weights being based on the total weight of (a), (b) and (c) before hydration.

12. A method for the preparation of pellets of a cementitious riaterial for use in a bed which method comprises adding the cementitious material and water to a rotating pelletizer and controlling the size of the pellets by controlling the rate of rotation of the pelletizer and optionally the Inclination of the pelletizer.

13. A method as claimed in claim 12 which comprises forming the pellets around a solid nucleating agent.

14. A method for the preparation of a cementitious material in particulate form for use in bed which method comprises hydrating the cementitious material under foam forming conditions to form a foamed hydrated cementitious material and then subdividing the hydrated material.

15. A method as claimed in claim 14 wherein air is caused to be entrapped in the material during the hydration.
